# EUROPÄISCHE PATENTSCHRIFT

(11) **EP 2 062 721 B1**
(45) Veröffentlichungstag und Bekanntmachung des Hinweises auf die Patenterteilung: **09.04.2014**
(21) Anmeldenummer: 08169445.7
(22) Anmeldetag: 19.11.2008
(51) Int. Cl.: B29C 65/50, B29C 63/18, B29C 63/42, B65B 53/00, B65C 3/06, B65D 23/08, B26F 1/38

(54) **Vorrichtung zum Verbinden von Kunststoffschläuchen**
Device for connecting plastic tubes
Dispositif destiné à la liaison de tuyaux souples en matière plastique

(30) Priorität: 22.11.2007 DE 102007056348
(43) Veröffentlichungstag der Anmeldung: 27.05.2009
(60) Teilanmeldung: 10171117.4
(73) Patentinhaber: Krones AG, 93073 Neutraubling (DE)
(72) Erfinder: Ederer, Roland, 93179 Brennberg (DE)
(74) Vertreter: Bittner, Bernhard

(56) Entgegenhaltungen:
- WO-A1-2005/042348
- WO-A1-2006/111332
- DE-T2- 60 103 112

## Beschreibung

Die vorliegende Erfindung bezieht sich auf eine Vorrichtung und ein Verfahren zum Verbinden von Kunststoffschläuchen und insbesondere von solchen Kunststoffschläuchen, die zum Etikettieren von Behältnissen verwendet werden. Aus dem Stand der Technik ist es bekannt, dass zum Etikettieren bestimmter Kunststoffbehältnisse Kunststoffschläuche über die Behältnisse gezogen und dann an die Behältnisse angeschrumpft werden. Dabei werden derartige Kunststoffschläuche üblicherweise von Rollen abgewickelt und in einem kontinuierlichen Verfahren über die Behältnisse gezogen. Nachdem eine Rolle verbraucht ist, wird üblicherweise im laufenden Betrieb der Endabschnitt dieser ersten Rolle mit einem Anfangsabschnitt einer nächsten Rolle verbunden und anschließend die weitere Rolle abgerollt. Um den eigentlichen Verbindungsvorgang, der dabei von Hand vorgenommen wird, zu überbrücken, sind Pufferanordnungen vorhanden, welche während des Verbindungsvorganges Material zum Etikettieren der Behältnisse bereitstellen.

Dabei ist es im Stand der Technik erforderlich, dass das Bedienungspersonal nach dem Ende jeder Rolle manuell den Endabschnitt der verbrauchten Rolle mit einem Anfangsabschnitt an einer neuen Rolle verbindet.

Aus der DE 601 03 112 T2 ist ein Verfahren zum Verbinden des Endes eines abgeflachten Rohrs aus Kunststofffolie mit dem Anfang eines anschließenden Rohrs bekannt. Dabei wird der Vorderrand des Anfangs des abgeflachten Rohrs mit einer schräg abgeschnittenen Ecke an beiden longitudinalen Rändern versehen und auf diese Weise das Zusammenführen mit dem jeweiligen anderen Anfangsabschnitt erleichtert. Dabei ist es jedoch stets erforderlich, die beiden Ecken abzuschrägen und dieser Vorgang muss mit sehr hoher Genauigkeit ausgeführt werden, da sonst die zu verbindenden Abschnitte schräg gegeneinander versetzt sind. Auch kann es zu einem Verkanten der Endabschnitte während des Verbindungsvorgangs kommen.

Die WO 2006/111332 A1 beschreibt eine Vorrichtung und ein Verfahren zum Verbinden der Enden zweier flachliegender Schlauchenden.

Der vorliegenden Erfindung liegt daher die Aufgabe zugrunde, eine Vorrichtung und ein Verfahren zur Verfügung zu stellen, welche ein einfacheres Verbinden der genannten Endabschnitte erlaubt. Weiterhin sollen eine Vorrichtung und ein Verfahren zur Verfügung gestellt werden, welche eine sehr genaue Verbindung der jeweiligen Endabschnitte miteinander sicherstellen.

Dies wird erfindungsgemäß durch eine Vorrichtung zum Verbinden von Kunststoffschläuchen nach Anspruch 1 und ein Verfahren zum Verbinden von Kunststoffschläuchen nach Anspruch 15 erreicht. Vorteilhafte Ausführungsformen und Weiterbildungen sind Gegenstand der Unteransprüche.

Eine erfindungsgemäße Vorrichtung zum Verbinden von Kunststoffschläuchen weist eine Ablagefläche auf, auf der ein Endabschnitt eines ersten Kunststoffschlauches abgelegt wird. Weiterhin weist die Vorrichtung eine Befestigungsfläche auf, um einen Bereich dieses Endabschnitts des Kunststoffschlauches zeitweise an der Vorrichtung zu befestigen. Erfindungsgemäß ist oberhalb der Ablagefläche ein bewegbarer Behandlungskörper zur Behandlung des Endabschnitts des Kunststoffschlauches vorgesehen, wobei dieser Behandlungskörper sowohl in einer Längsrichtung des Kunststoffschlauches als in einer senkrecht zu der Ablagefläche stehenden Richtung gegenüber der Ablagefläche bewegbar ist.

Unter einem Behandlungskörper wird ein Körper verstanden, der auf einen weiteren Körper, hier den Kunststoffschlauch bzw. dessen Endabschnitt, einwirkt. Vorzugsweise ist dieser Behandlungskörper zwischen wenigstens zwei Stellungen bezüglich der Ablagefläche bewegbar, wobei der Behandlungskörper in einer ersten Stellung in einer Transportrichtung des Kunsstoffschlauches zumindest teilweise und bevorzugt vollumfänglich vor der Befestigungsfläche angeordnet ist und besonders bevorzugt ausgehend von dieser Stellung in Richtung der Befestigungsfläche verschiebbar ist. Vorzugsweise kann der Behandlungskörper in einer zweiten Stellung gegenüber der Ablagefläche im Wesentlichen wenigstens teilweise und bevorzugt vollständig oberhalb der Befestigungsfläche angeordnet werden.

Vor dem Verbindungsvorgang zweier Endabschnitte wird bevorzugt der erste Endabschnitt in zwei Bereiche aufgetrennt, wobei ein erster Bereich durch die Befestigungsfläche gehalten wird und ein zweiter Bereich gegenüber dem ersten Bereich abgeknickt wird. Während des Verbindungsvorganges wird der zweite mit dem ersten Endabschnitt zu verbindende Endabschnitt in einen Zwischenraum zwischen den beiden Bereichen eingeführt. Zu diesem Zeitpunkt ist der Behandlungskörper in der Transportrichtung des Kunststoffschlauches vor dem Endabschnitt bzw. auch den beiden Bereichen angeordnet, um das Einführen des zweiten Endabschnitts nicht zu behindern.

Nach dem Einführen des zweiten Endabschnitts wird der Behandlungskörper sowohl in der Transportrichtung des Kunststoffschlauches als auch bevorzugt auf die bereits zusammengeführten Endabschnitte beider Kunststoffschläuche zu geführt, um die Verbindung dieser Endabschnitte zu verfestigen.

Vorzugsweise ist der Behandlungskörper an der Vorrichtung angeordnet, es wäre jedoch auch möglich, dass der Behandlungskörper an einer Anlage angeordnet wird und die Vorrichtung gegenüber dieser Anlage bewegt wird.

Unter einer Befestigungsfläche wird eine Fläche bzw. ein Flächenabschnitt verstanden, der durch bestimmte Mittel den Endabschnitt oder einen Teil dieses Endabschnitts vorübergehend festhält. Vorzugsweise handelt es sich dabei um eine Saugleiste, die diesen entsprechenden Endabschnitt anzieht. Es könnten jedoch auch elektrostatische Haltemittel oder dergleichen vorgesehen sein.

Dabei bewirkt diese Befestigungsfläche, dass der Endabschnitt wenigstens vor und während dem eigentlichen Verbindungsvorgang gehalten wird. Nach Fertigstellung der Verbindung wird der betreffende Endabschnitt oder ein Bereich dieses Endabschnitts wieder freigegeben. Vorzugsweise handelt es sich bei dem Kunststoffschlauch um einen abgeflachten Schlauch d. h. einen Schlauch, der im Wesentlichen zwei zueinander parallele Flächen und zwei links- und rechtsseitige Kanten diesbezüglich aufweist. Im Bereich des Endabschnittes wird die obere Fläche von der unteren Fläche getrennt, d. h. insbesondere werden diese beiden Kanten aufgetrennt.

Der erste Bereich liegt anschließend an der Befestigungsfläche an und der zweite Bereich wird beispielsweise durch eine unten noch im Detail zu erläuternde Haltestange beispielsweise in einer abgeknickten Stellung gegenüber dem ersten Bereich gehalten. An dem Behandlungskörper kann einerseits einer der beiden Bereiche vor dem eigentlichen Verbindungsvorgang anliegen und andererseits bewirkt der Behandlungskörper anschließend, dass die beiden Bereiche aneinandergepresst werden. Um den Endabschnitt besonders günstig für die Verbindung vorbereiten zu können, ist erfindungsgemäß der Behandlungskörper einerseits senkrecht zu der Ablagefläche bewegbar damit er hochgehoben werden kann und andererseits auch in der Längsrichtung des Kunststoffschlauches bewegbar um den Verbindungsvorgang zu unterstützen. Unter der Längsrichtung des Kunststoffschlauches wird die Richtung verstanden, in der sich der Kunststoffschlauch im Wesentlichen erstreckt. Dies ist dabei bevorzugt auch die Transportrichtung, entlang derer der Kunststoffschlauch transportiert wird. Vorzugsweise ist der Behandlungskörper ein langgestreckter Körper, der sich senkrecht zu einer Ebene erstreckt, die durch die Längsrichtung die senkrecht zu der Ablagefläche verlaufende Richtung aufgespannt wird.

Der Behandlungskörper weist wenigstens eine Rolle auf, die um eine Drehachse drehbar ist, welche senkrecht zu einer Ebene steht, welche durch die Transportrichtung und die zur Ablagefläche stehende Richtung aufgespannt wird. Damit erstreckt sich bevorzugt diese Rolle von einer Längskante des Kunststoffschlauches zu der anderen Längskante. Der Vorteil einer Ausführung als Rolle liegt darin, dass nach dem Verbinden der Endabschnitte dieser rollenförmige Behandlungskörper zum Verfestigen der Verbindung über den Verbindungsabschnitt gerollt werden kann.

Vorzugsweise ist der Behandlungskörper schwenkbar um eine vorgegebene Schwenkachse an der Vorrichtung angeordnet. Vorteilhaft ist ein Ausleger vorgesehen, der an einem Ende schwenkbar an der Vorrichtung angeordnet ist und der an seinem zweiten Ende den Behandlungskörper bzw. die Drehachse dieses Behandlungskörpers aufweist. Durch diese Schwenkbewegung wird insbesondere auch eine Bewegung des Behandlungskörpers in der zu der Ablagefläche senkrechtstehenden Richtung erreicht.

Weiterhin ist der Behandlungskörper auch verschiebbar in der Längsrichtung des Kunststoffschlauches gegenüber der Ablagefläche angeordnet. Zu diesem Zweck kann ein Schlitten vorgesehen sein, der sich in der Längsrichtung des Kunststoffschlauches bzw. auch in der Längsrichtung der Ablagefläche erstreckt, und entlang dessen die Rolle verschoben werden kann. Damit ist besonders bevorzugt die Trenneinrichtung sowohl schwenkbar als auch verschiebbar gegenüber der Ablagefläche angeordnet. Die Verschiebbarkeit dient, wie oben gesagt, zum Verfestigen des Verbindungsbereichs nach dem Herstellen der Verbindung zwischen den Endabschnitten.

Bei einer weiteren bevorzugten Ausführungsform weist die Vorrichtung eine Haltestange auf, die parallel zu dem Behandlungskörper angeordnet ist. Dabei ist es möglich, dass während des Verbindungsvorganges, der, wie unten ausgeführt, automatisch durchgeführt wird, der umgeknickte Bereich des Endabschnitts durch diese Haltestange gehindert wird, sich auf den ersten Bereich, der durch die Befestigungsfläche gehalten wird, zuzubewegen. Vorzugsweise ist damit diese Haltestange wenigstens zeitweise zwischen dem ersten Bereich des Endabschnitts und dem zweiten Bereich des Endabschnitts vorgesehen. Vorzugsweise ist diese Haltestange in einer Nut versetzbar, wobei die Nut derart ausgeführt ist, dass die Haltestange dennoch in einer vorgegebenen Endposition festgesetzt werden kann.

Bei einer weiteren vorteilhaften Ausführungsform sind an der Ablagefläche wenigstens zwei Positionierungsstifte vorgesehen, welche in einer senkrecht zu der Ablagefläche zu stehenden Richtung verschiebbar sind. Diese Positionierungsstifte können während des Verbindungsvorganges durch entsprechende Löcher bzw. Öffnungen, die bereits vorher in dem Kunststoffschlauch angebracht wurden, hindurch treten und gewährleisten damit eine genaue geometrische Fixierung des Kunststoffschlauches gegenüber der Ablagefläche. Zur Betätigung dieser beiden Positionierungsstifte können insbesondere aber nicht ausschließlich pneumatische, mechanische oder magnetische Antriebe vorgesehen sein.

Bei einer weiteren vorteilhaften Ausführungsform sind Arretierungsmittel vorgesehen, welche den Behandlungskörper in einer vorbestimmten Position gegenüber der Befestigungsfläche bzw. auch gegenüber der Ablagefläche arretieren.

Die vorliegende Erfindung ist weiterhin auf eine Anlage zum Verbinden von Kunststoffschläuchen mit wenigstens einer Vorrichtung der oben beschriebenen Art gerichtet. Daneben weist diese Anlage eine Heranführungseinrichtung auf, welche ein mit dem Endabschnitt des Kunststoffschlauches zu verbindenden Endabschnitt eines weiteren Kunststoffschlauches an diesen Kunststoffschlauch heranführt. Bei diesem weiteren Kunststoffschlauch handelt es sich vorzugsweise um den Endabschnitt der gerade vollständig abgerollten Rolle. Dieser Endabschnitt wird mit einem Anfangsabschnitt der nächsten Rolle verbunden.

Vorzugsweise weist die Anlage mehrere Vorrichtungen der oben beschriebenen Art auf und die Heranführungseinrichtung kann zwischen diesen Vorrichtungen bewegt werden. Vorzugsweise ist dabei diese Heranführungseinrichtung in einer senkrecht zu der Transportrichtung stehenden Richtung bewegbar und kann auf diese Weise an jede einzelne der oben genannten Vorrichtungen herangeführt werden. Die gesamte Anlage weist weiterhin ein Rollenmagazin auf, in dem eine Vielzahl von Rollen vorgesehen ist, welche mit den Kunststoffschläuchen versehen sind. Im Gegensatz zum Stand der Technik ist nicht bei jedem Rollenwechsel ein manuelles Eingreifen des Benutzers erforderlich sondern dieser muss nur zu Beginn des Prozesses eine bestimmte Anzahl von Endabschnitten vorbereiten und der eigentliche Verbindungsprozess wird anschließend automatisch vorgenommen.

Vorzugsweise weist die Heranführungseinrichtung einen Antrieb auf, der zum Verschieben der Heranführungseinrichtung den einzelnen erfindungsgemäßen Vorrichtungen dient. Besonders vorteilhaft sind die erfindungsgemäßen Vorrichtungen selbst antriebsfrei ausgeführt. Auf diese Weise kann in besonders rationaler Weise mit besonders wenigen Antrieben der Verbindungsprozess durchgeführt werden.

Es wird darauf hingewiesen, dass im Rahmen der vorliegenden Beschreibung der Behandlungskörper direkt an der oben genannten Vorrichtung vorgesehen ist. Es wäre jedoch auch möglich, dass die Vorrichtung ohne den Behandlungskörper ausgeführt wird und anstelle dessen ein entsprechender Behandlungskörper an der Heranführungseinrichtung vorhanden ist.

Bei einer weiteren vorteilhaften Ausführungsform weist die Anlage eine Sensoreinrichtung auf, welche eine geometrische Position des Endabschnitts des Kunststoffschlauches erfasst. Vorzugsweise handelt es sich dabei um einen optischen Sensor, der eine Position senkrecht zur Transportrichtung des Kunststoffschlauches erfasst. Dieser optische Sensor kann dabei an jeder der oben genannten Vorrichtungen angeordnet sein, besonders bevorzugt befindet er sich jedoch an der Heranführungseinrichtung. Vorteilhaft weist die Anlage auch eine Steuereinrichtung auf, die in Reaktion auf eine durch den Sensor festgestellte Position die Bewegung der Heranführungseinrichtung steuert. Auf diese Weise ist eine besonders präzise Ausrichtung der jeweiligen Endabschnitte der Kunststoffschläuche zueinander möglich.

Bei einer weiteren vorteilhaften Ausführungsform weist die Heranführungseinrichtung eine Antriebsrichtung auf, welche den Behandlungskörper gegenüber der Ablagefläche bewegt. Wie oben erwähnt, ist die Vorrichtung zum Verbinden der Endabschnitt besonders bevorzugt antriebsfrei und ein entsprechender Antrieb befindet sich in der Heranführungseinrichtung. Auf diese Weise können Kosten eingespart werden.

Die vorliegende Erfindung ist weiterhin auf eine Präparierungseinheit zum Präparieren von zu verbindenden Kunststoffschläuchen gerichtet. Diese Präparierungseinheit weist eine Analagefläche auf, auf deren Endabschnitt eines Kunststoffschlauches angelegt werden kann. Weiterhin sind Befestigungsmittel vorgesehen, um den Endabschnitt wenigstens zeitweise befestigen, wobei diese Befestigungsmittel vorzugsweise mit einer Schneideinrichtung zum Abschneiden der Kunststoffschläuche gekoppelt sind. Erfindungsgemäß weist die Präparierungseinheit Stanzmittel auf, welche in die Kunststoffschläuche Löcher einbringen und diese Stanzmittel sind derart mit dem Betätigungselement gekoppelt, dass bei einer vorgegebenen Betetätigung des Betätigungselementes sowohl ein Schneidevorgang als auch ein Stanzvorgang durchgeführt wird.

Durch diese Koppelung wird in besonders einfacher Weise erreicht, dass einerseits der Endabschnitt des Kunststoffschlauches an einer bestimmten Stelle geschnitten wird und andererseits auch die beiden Löcher erzeugt werden, die später für die Positionierungsstifte der oben beschriebenen Vorrichtung und damit zur Positionierung des Kunststoffschlauches gegenüber dieser Vorrichtung dienen. Bei einer vorteilhaften Ausführungsform weist das Stanzmittel zwei voneinander beabstandete Stifte auf, wobei besonders vorteilhaft der Abstand der voneinander beabstandeter Stifte veränderbar ist. Auf diese Weise kann die Präparierungseinheit auch auf unterschiedliche Breiten der jeweiligen Kunststoffschläuche angepasst werden.

Die vorliegende Erfindung ist weiterhin auf ein Verfahren zum Verbindung von Kunststoffschläuchen gerichtet, wobei in einem ersten Schritt ein Endabschnitt eines ersten Kunststoffschlauches präpariert und dieser Endabschnitt auf einer Vorrichtung zum Verbinden von Kunststoffschläuchen abgelegt wird. In einem weiteren Verfahrensschritt wird ein Endabschnitt eines zweiten Kunststoffschlauches an den Endabschnitt des ersten Kunststoffschlauches herangeführt und in einem weiteren Verfahrensschritt der Endabschnitt des ersten Kunststoffschlauches mit dem Endabschnitt des zweiten Kunststoffschlauches an einem vorgegebenen Verbindungsabschnitt verbunden.

Erfindungsgemäß wird der Endabschnitt des ersten Kunststoffschlauches wenigstens zeitweise gegenüber der Vorrichtung befestigt, wobei ein oberhalb der Ablagefläche vorgesehener Behandlungskörper während des Verbindens gegenüber der Ablagefläche sowohl in einer Längsrichtung des Kunststoffschlauches als auch in einer senkrecht zu der Ablagefläche stehenden Richtung bewegt wird.

Vorteilhaft wird der erste Endabschnitt des ersten Kunststoffschlauches mit einem selbstklebenden Material bestückt. Genauer gesagt werden die beiden voneinander getrennten Bereiche des Endabschnitts gegebenenfalls mit einem selbstklebenden Material versehen und zur Verbindung an den zu verbindenden Endabschnitt des zweiten Kunststoffschlauches angepresst.

Nach dem Verbinden der Endabschnitte wird der Behandlungskörper über einen Verbindungsabschnitt bewegt. Auf diese Weise wird, wie oben bereits dargelegt, die Verbindung weiter verfestigt.

Vorteilhaft wird der Endabschnitt mit einer Präparierungseinheit der oben beschriebenen Art präpariert.

Vorteilhaft werden weiterhin die Endabschnitte mit einer Vorrichtung der oben beschriebenen Art verbunden.

Weitere Vorteile und Ausführungsform ergeben sich aus den beigefügten Zeichnungen:

Darin zeigen:
- Fig. 1a: eine perspektivische Ansicht einer erfindungsgemäßen Vorrichtung zum Verbinden von Kunststoffschläuchen;
- Fig. 1b: eine Querschnittsansicht einer in Fig. 1a gezeigten Vorrichtung;
- Fig. 2a: eine perspektivische Ansicht einer erfindungsgemäßen Heranführungseinrichtung zum Verbinden von Kunststoffschläuchen ohne die Vorrichtung aus Fig. 1a;
- Fig. 2b: die Heranführungseinrichtung aus Fig. 2a mit einer Vorrichtung gemäß Fig. 1a;
- Fig. 3a: eine Seitenansicht der in Fig. 2a gezeigten Darstellung;
- Fig. 3b: eine Seitenansicht der in Fig. 2b gezeigten Darstellung;
- Fig. 4a: eine erste Ansicht einer Sensoreinrichtung für die Anlage aus Fig. 3a;
- Fig. 4b: eine perspektivische Ansicht der Sensoreinrichtung aus Fig. 4a;
- Fig. 5a: eine erste Ansicht einer erfindungsgemäßen Präparierungseinheit, und
- Fig. 5b: eine weitere Ansicht der Präparierungseinheit auf Fig. 5a.

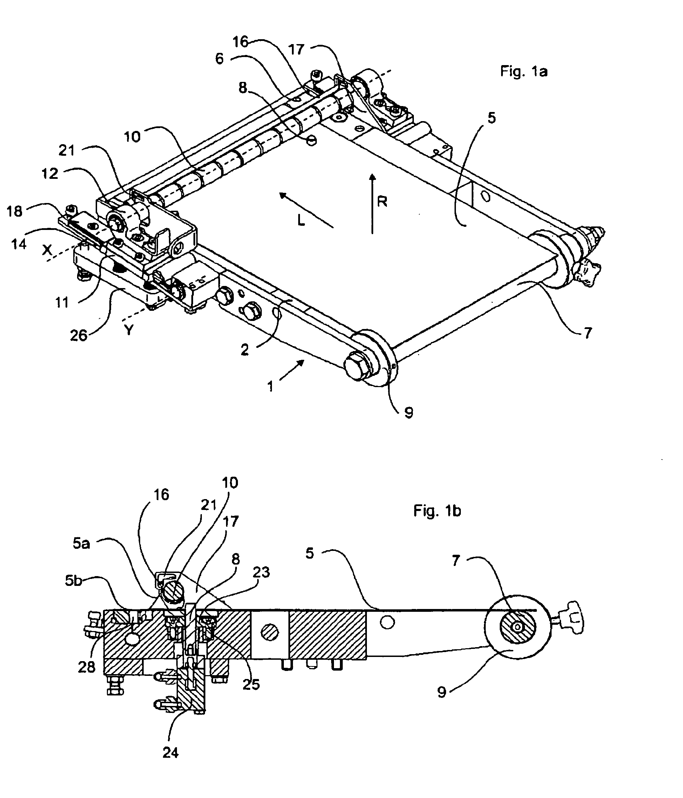

Fig. 1 zeigt eine erfindungsgemäße Vorrichtung zum Verbinden von Kunststoffschläuchen. Dabei bezieht sich das Bezugszeichen 2 auf eine zum größten Teil verdeckte Ablagefläche, auf der ein nur abschnittsweise gezeigter Kunststoffschlauch 5 aufliegt. In der Anwendung endet der Kunststoffschlauch nicht mit der gezeigten Kante, sondern führt weiter zu einem Rollenmagazin und insbesondere zu einer Rolle, auf der der Kunststoffschlauch aufgewickelt ist. Der Kunststoffschlauch 5 wird diesem Zweck über eine Umlenkrolle 7 gelenkt. Das Bezugszeichen 9 bezieht sich auf Seitenscheiben, welche zum Ausrichten des Kunststoffschlauchs gegenüber der Vorrichtung 1 dienen.

Im vorderen Bereich der Vorrichtung befindet sich eine (ebenfalls größtenteils verdeckte) Befestigungsfläche 6, die zum vorübergehenden Befestigen des Kunststoffschlauches 5 dient. Dabei handelt es sich vorzugsweise um eine Saugleiste, die durch einen Unterdruck einen Endbereich des Kunststoffschlauchs 5 anzieht. Das Bezugszeichen L bezieht sich auf eine Längsrichtung des Kunststoffschlauches und gleichzeitig auch auf diejenige Richtung, entlang derer der Kunststoffschlauch im Betrieb transportiert wird. Das Bezugszeichen R kennzeichnet eine senkrecht zu der Ablagefläche 2 stehende Richtung.

Zum genauen Positionieren des Kunststoffschlauches 5 dienen Positionierungsstifte 8, die durch bereits vorab durch den Kunststoffschlauch 5 gestanzte Löcher hindurchtreten und ihn auf diese Weise positionieren.

Das Bezugszeichen 10 zeigt einen Behandlungskörper, der hier als Rolle bzw. Walze ausgeführt ist, wobei diese Rolle bzw. Walze 10 bevorzugt aus einem Gummimaterial besteht. Parallel zu dem Behandlungskörper 10 ist eine Haltestange 16 vorgesehen, die in Fig. 1 teilweise durch den Behandlungskörper 10 verdeckt ist. Diese Haltestange 16 dient zum Einfädeln eines Endabschnittes des Kunststoffschlauches bzw. dazu, den Endabschnitt wenigstens zeitweise in Richtung des Behandlungskörpers 10 räumlich in zwei Bereiche 5a, 5b zu trennen. Zu diesem Zweck ist die Haltestange 16 bzw. sind die Endabschnitte der Haltestange 16 in einer abgewinkelten Nut 21 geführt. Diese Nuten 21 wiederum sind an einem Halteblech 17 angeordnet, welches gleichzeitig auch als Arretierungsmittel für den Behandlungskörper 10 dient.

Das Bezugszeichen 12 zeigt eine Lagerung für den Behandlungskörper bzw. dessen Endabschnitte, wobei diese Lagerung auch, wie untern erläutert wird, geeignet ist, um von einem entsprechenden Maschinenelement einer Anlage zum Verbinden von Kunststoffschläuchen geführt zu werden. Weiterhin ist der Behandlungskörper 10 über einen Ausleger 11 schwenkbar gegenüber einer Schwenkachse Y und damit auch gegenüber der Ablagefläche 2 angeordnet. Es wird dabei darauf hingewiesen, dass bei der in Fig. 1 gezeigten Ausführungsform der Behandlungskörper 10 letztlich auch an der Vorrichtung 1 angeordnet ist. Es wäre jedoch auch möglich, den Behandlungskörper 10 nicht an der Vorrichtung 1 selbst anzuordnen, sondern an einem weiteren Element der Anlage zum Verbindung von Kunststoffschläuchen. Das Bezugszeichen 14 bezieht sich auf einen Schlitten, der gegenüber einem Träger 18 verschiebbar ist. Auf diese Weise kann auch eine Bewegung des Behandlungskörpers 10 in der Längsrichtung L ausgeführt werden. Das Bezugszeichen 26 bezieht sich auf einen Befestigungskörper, mit dem die Vorrichtung 1 an einer senkrecht zu der Längsrichtung L verlaufenden Schiene (nicht gezeigt) befestigt werden kann. Der Behandlungskörper 10 ist dabei drehbar um eine Drehachse X, die ebenfalls senkrecht zu der Längsrichtung L steht, angeordnet.

Fig. 1b zeigt eine Querschnittsansicht der in Fig. 1a gezeigten Vorrichtung. Man erkennt hier, dass der Kunststoffschlauch 5 bzw. der betreffende Endabschnitt 5 des Kunststoffschlauches an seinem Ende bereits in einen Bereich 5b und einen Bereich 5a aufgetrennt wurde. Der Bereich 5b wird dabei durch die Befestigungseinrichtung 6 (Fig. 1) angezogen und der Bereich 5a zwischen dem Behandlungskörper 10 der Haltestange 16 eingefügt und dort gehalten. Zu diesem Zweck ist die Haltestange 16 in der Winkelnut 21 an ihrer unteren Position angeordnet.

Zum Verbinden wird sowohl auf den Bereich 5a als auch auf den Bereich 5b des Kunststoffschlauches ein Klebemittel wie beispielsweise ein doppelseitiges Klebeband aufgebracht. Das Bezugszeichen 28 zeigt eine Öffnung, die Bestandteil der Saugleiste 6 ist. Das Bezugszeichen 8 bezieht sich wiederum auf den Positionierungsstift, der mittels einer Pneumatikeinrichtung 24 gehoben und gesenkt werden kann. Dabei ist die Ansteuerung dieser Pneumatikeinrichtung 24 auf weitere Elemente der gesamten Anlage synchronisiert. Das Bezugszeichen 23 bezieht sich auf eine Verschiebeeinrichtung, mit der der Positionierungsstift 8 einschließlich der Pneumatikeinrichtung 24 in einer senkrecht zu der Figurenebene stehenden Richtung verschoben werden kann. Das Bezugszeichen 25 bezieht sich auf Befestigungsmittel wie Schrauben, welche den Positionierungsstift in einer bestimmten Stellung festsetzten.

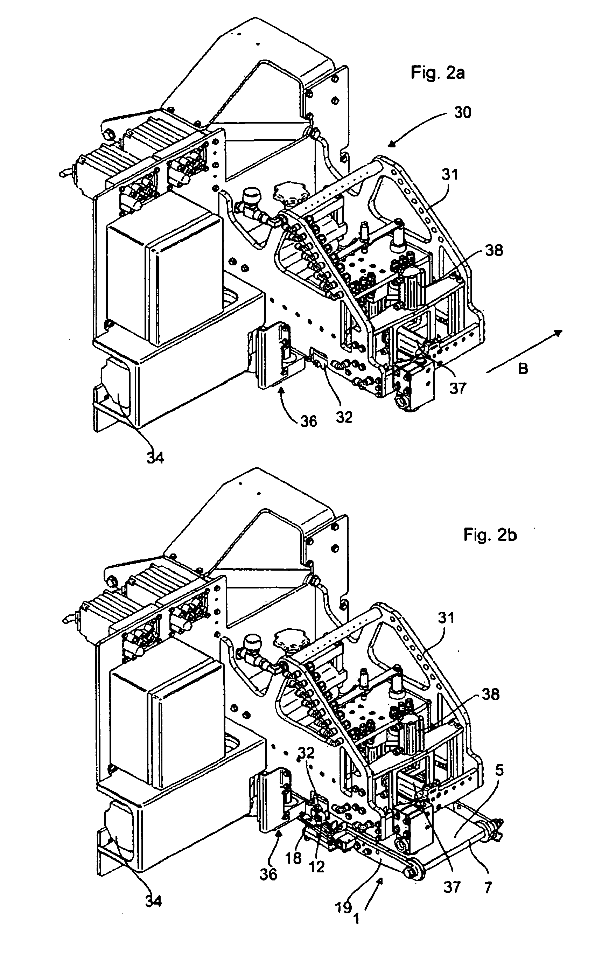

Fig. 2a zeigt eine erfindungsgemäße Heranführungseinrichtung 30 zum Verbinden von Kunststoffschläuchen bzw. die in Fig. 2a gezeigte Heranführungseinrichtung wird im Betrieb in der Bewegungsrichtung B zwischen einzelnen Vorrichtungen 1 (vgl. Fig. 1a) verschoben, bei der diese Bewegungsrichtung B mit der oben gezeigten Richtung der Drehachse X übereinstimmt. Dabei sind an einem Gestell 31 mehrere Pneumatikzylinder 37, 38 angeordnet, sowie auch eine Sensoreinrichtung 36, welche zur Positionsbestimmung des Kunststoffschlauches und damit zu einer genauen Ausrichtung der Heranführungseinrichtung 30 dient. Das Bezugszeichen 34 kennzeichnet eine Antriebseinrichtung wie einen Motor, welche in Betrieb den Kunststoffschlauch transportiert bzw. fördert. Mit Hilfe einer Klammer 32 wird, wie unten genauer erklärt wird, die Lagerung 12 gegriffen und entsprechend den einzelnen Verfahrensschritten verschoben.

Fig. 2b zeigt die Anlage aus Fig. 2a, wobei in dieser Position auch die Vorrichtung 1 dargestellt ist. Man erkennt hier, dass die Klammer 32 in der Lage ist, die Lagerung 12 zu greifen. Das Bezugszeichen 19 bezieht sich auf einen Rahmen der Vorrichtung 1.

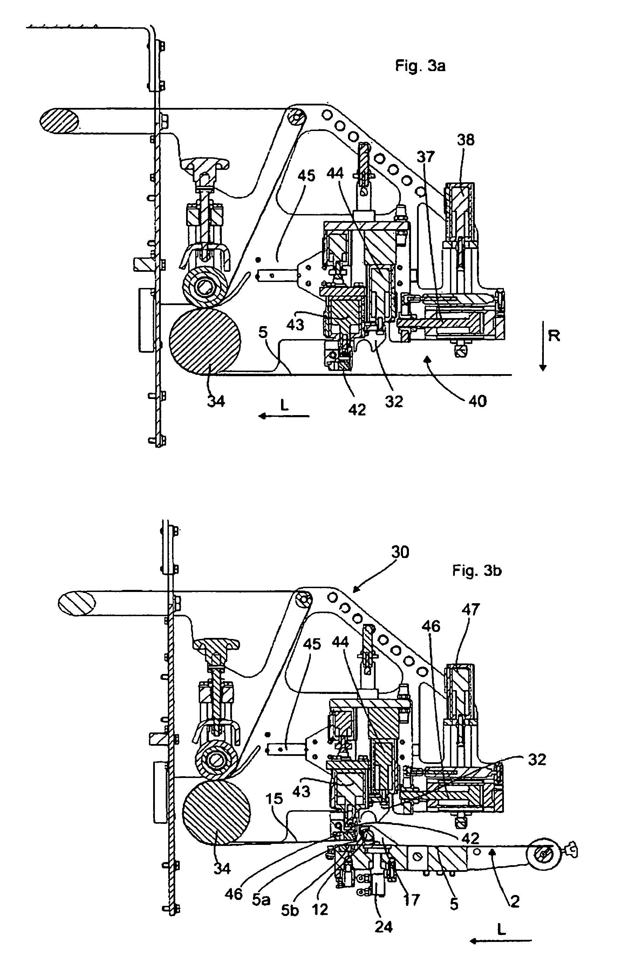

Fig. 3a zeigt eine Querschnittsansicht der in Fig. 2a gezeigten Vorrichtung, wobei hier die erfindungsgemäße Vorrichtung 1 nicht vorhanden ist. Das Bezugszeichen 37 bezieht sich auf eine Pneumatikanordnung für eine Horizontalverschiebung des gesamten Verbindungsmechanismus sich gegenüber einem Träger 45. Das Bezugszeichen 44 zeigt eine weitere Pneumatikeinheit, mit der die Klammer 32 in vertikaler Richtung d. h. der Richtung R verschoben werden kann. Bei dieser Vertikalbewegung wird, wie oben erwähnt, die Lagerung 12 der Vorrichtung 1 gegriffen und damit kann auch der Behandlungskörper 10 sowohl in vertikaler Richtung als auch in Längsrichtung L bewegt werden. Bei einer Antriebswelle 34 wird der Kunststoffschlauch 5 im Betrieb fortbewegt.

Fig. 3b zeigt eine Ansicht der Anlage aus Fig. 3a wobei hier auch die Vorrichtung 1 eingeschoben ist. Man erkennt hier, dass der Endabschnitt des Kunststoffschlauches 5 mit einem entsprechenden Endabschnitt eines weiteren Kunststoffschlauches 15 verbunden werden soll. Zu diesem Zweck wird zunächst die Heranführungseinrichtung 30 senkrecht zu der Figurenebene so verschoben, dass die beiden Endabschnitt 5 und 15 genau gegeneinander positioniert sind. Um dies zu erreichen dient, wie oben erwähnt, eine Sensoreinrichtung, die die Position des Kunststoffschlauches 15 bzw. 5 in der senkrecht zu der Figurenebene stehenden Richtung bestimmt. Anschließend wird mit dem Stempel 42 der Endabschnitt 15 auf den Bereich 5b des Kunststoffschlauches 5 gedrückt.

An dem Stempel 42 ist eine weitere Befestigungseinrichtung 46, wie eine Saugleiste, vorgesehen. In einem weiteren Verfahrensschritt wird mit Hilfe der Klammer 32 die Lagerung 12 und damit auch der Behandlungskörper 10 herabgedrückt und anschließend mit einer Horizontalbewegung entlang der Richtung L auch der Bereich 5a des Kunststoffschlauchs 5 über den anderen Endabschnitt des weiteren Kunststoffschlauches 15 gelegt. Bei den verwendeten doppelseitigen Klebebändern wird auf diese Weise eine Verbindung zwischen den beiden Kunststoffschläuchen 5 und 15 hergestellt. Um die Verbindung zu verbessern, wird der Behandlungskörper 10 über Verbindungsstelle zwischen den beiden Kunststoffschläuchen 5, 15 gerollt und auf diese Weise die Verbindung fixiert. Anschließend wird wiederum der Behandlungskörper 10 freigegeben, indem die Klammer 32 abgezogen wird. Bevorzugt weist daher die Vorrichtung 1 eine (nicht gezeigte) Federungseinrichtung auf, welche Behandlungskörper in der Richtung R weg von der Ablagefläche 2 der Vorrichtung 1 vorspannt.

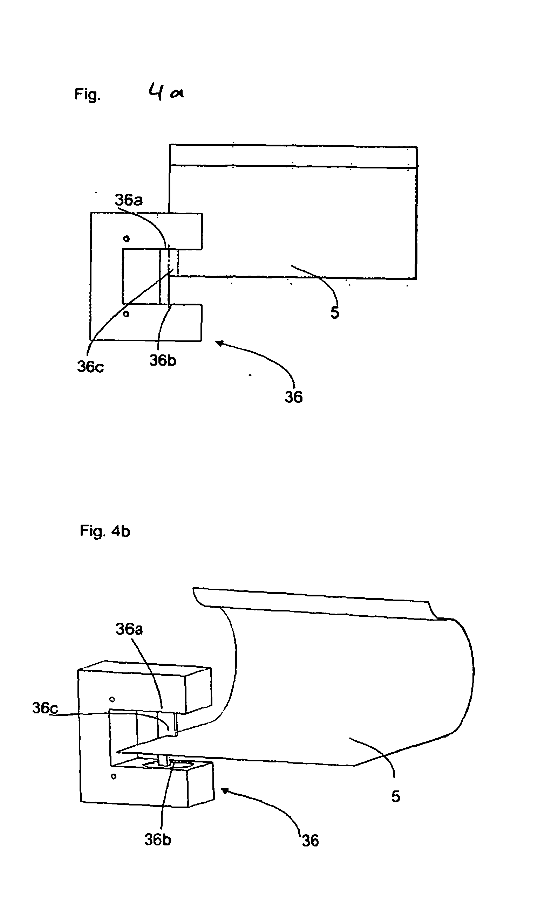

Fig. 4a zeigt schematisch eine Sensoreinrichtung 36, die an der Heranführungseinrichtung 30 angeordnet ist und dazu dient, um die genaue Position des Kunststoffschlauches 15 zu bestimmen. Bei dieser Sensoreinrichtung 36 handelt es sich hier um eine optische Sensoreinrichtung 36. Ausgehend von einer Aussendeeinrichtung 36a wird der Strahl 36c in Richtung eines Empfängers bzw. Detektors 36b geschickt. Falls nun der Kunststoffschlauch 15 an einer vorgegebenen Position gegenüber der Sensoreinrichtung ist kann dies durch den auf dem Empfänger 36 b auftreffenden Strahl ermittelt werden.

Fig. 4b zeigt eine perspektivische Ansicht der Sensoreinrichtung. Das auf von dem Empfänger 36b ausgegebene Signal hängt davon ab, welcher Anteil des Strahls 36c durch den Kunststoffschlauch 15 verdeckt wird. Auf diese Weise ist eine sehr exakte Positionierung des Kunststoffschlauches 15 gegenüber dem (nicht gezeigten) Kunststoffschlauch 5 möglich.

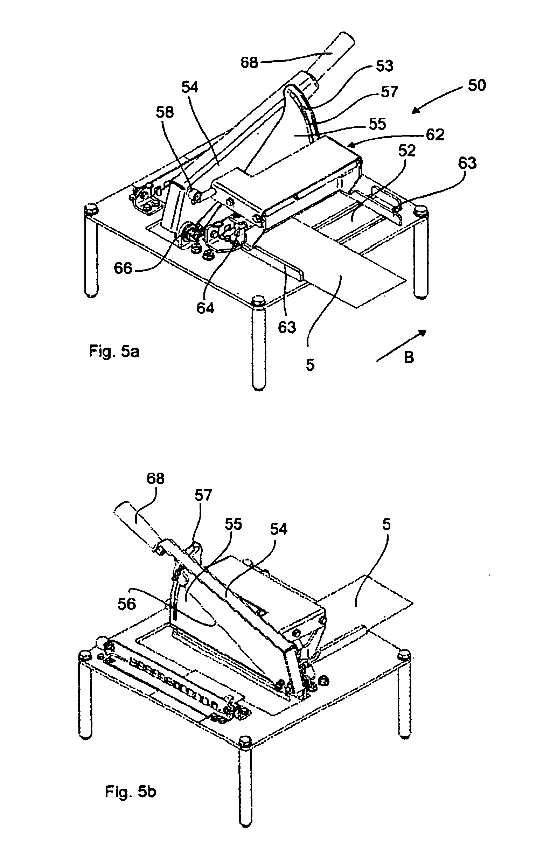

Fig. 5a zeigt eine erste Ansicht einer erfindungsgemäßen Präparierungseinheit 50 zum Vorbereiten eines Endabschnitts eines Kunststoffschlauchs 5. Diese Präparierungseinheit 50 weist eine Ablage 52 auf, auf der der Endabschnitt des Kunststoffschlauchs 5 abgelegt wird. Weiterhin ist ein Betätigungselement 54 in Form eines Hebels mit einen daran angeordneten Griff 68 vorgesehen. Durch eine Betätigung dieses Betätigungselementes wird sowohl ein Schneidvorgang als auch ein Stanzvorgang ausgelöst. Dabei ist an dem Betätigungselement 54 ein Vorsprung bzw. ein Bolzen 53 angeordnet, der in einer Nut 57 einer Befestigungsscheibe 55 angeordnet ist. Bevorzugt dient diese Befestigungsscheibe 55 auch dazu, um den Kunststoffschlauch 5 zeitweise während des Betätigensvorgangs gegenüber der Ablagefläche 52 zu befestigen. Das Bezugszeichen 62 bezieht sich in seiner Gesamtheit auf ein Stanzmittel, um neben dem eigentlichen Schneidvorgang und gleichzeitig auch Löcher in den Kunststoffschlauch 5 zu stanzen. Dabei ist an dem Betätigungselement 54 ein weiterer Bolzen 58 vorgesehen, der bei einer Betätigung des Betätigungselements gleichzeitig auch das Stanzmittel 62 bewegt. Das Betätigungselement 54 ist schwenkbar gegenüber einer Schwenkachse 66 angeordnet. Das Bezugszeichen 63 bezieht sich auf Kanten, welche zur Positionierung des Kunststoffschlauches dienen. Wenigstens eine dieser Kanten 63 ist in der Richtung B verstellbar. Das Bezugzeichen 64 bezieht sich auf einen Stift, der im Rahmen des eigentlichen Stanzvorgangs durch die Kunststofffolie hindurchgedrückt wird. Auch die Position diese Stiftes 64 ist in der Richtung B verstellbar.

Fig. 5b zeigt eine weitere Ansicht der in Fig. 5a gezeigten Präparierungseinheit. Dabei bezieht sich das Bezugzeichen 56 auf ein Schneidelement bzw. eine Schneidkante, welche zum Abschneiden des Kunststoffschlauches 5 dient.

## Patentansprüche

1. Vorrichtung (1) zum Verbinden von Kunststoffschläuchen mit einer Ablagefläche (2), auf der ein Endabschnitt eines ersten Kunststoffschlauches (5) abgelegt wird, mit einer Befestigungsfläche (6), um einen Bereich (5b) des Endabschnitts des Kunststoffschlauches (5) zeitweise an der Vorrichtung (1) zu befestigen,
wobei oberhalb der Ablagefläche (2) ein bewegbarer Behandlungskörper (10) zur Behandlung des Endabschnitts des Kunststoffschlauches (5) vorgesehen ist, wobei dieser Behandlungskörper (10) sowohl in einer Längsrichtung (L) des Kunststoffschlauches (5), entlang derer der Kunststoffschlauch im Betrieb transportiert wird als auch in einer senkrecht zu der Ablagefläche (2) stehenden Richtung (R) gegenüber der Ablagefläche (2) bewegbar ist, wobei
der Behandlungskörper (10) wenigstens eine Rolle (10) aufweist, die um eine Drehachse (X) drehbar ist, welche senkrecht zu einer Ebene steht, welche durch die Richtungen (R) und (L) aufgespannt wird.

2. Vorrichtung (1) nach wenigstens einem der vorangegangenen Anspruch,
**dadurch gekenntzeichnet, dass** der Behandlungekörper (10) schwenkbar um eine vorgegebene Schwenkachse (Y) an der Vorrichtung (1) angeordnet ist.

3. Vorrichtung (1) nach wenigstens einem der vorangegangenen Ansprüche,
**dadurch gekennzeichnet, dass** der Behandlungskörper (10) zwischen wenigstens zwei Stellungen bezüglich der Ablagefläche (2) bewegbar ist, wobei der Behandlungskörper (10) in einer ersten Stellung in der Längsrichtung (L) des Kunsstoffschlauches (5) zumindest teilweise vor der Befestigungsfläche (6) angeordnet ist.

4. Vorrichtung (1) nach wenigstens einem der vorangegangenen Ansprüche,
**dadurch gekennzeichnet, dass** die Vorrichtung (1) eine Haltestange (16) aufweist, die parallel zu dem Behandlungskörper (10) angeordnet ist.

5. Vorrichtung (1) nach wenigstens einem der vorangegangenen Ansprüchen,
**dadurch gekennzeichnet, dass** Arretierungsmittel vorgesehen sind, welche den Behandlungskörper (10) in einer vorbestimmten Position gegenüber der Befestigungsfläche (6) arretieren.

6. Anlage zum Verbinden von Kunststoffschläuchen mit wenigstens einer Vorrichtung (1) nach einem der vorangegangenen Ansprüche, sowie einer Heranführungseinrichtung (30) welche ein mit dem Endabschnitt des Kunststoffschlauches (5) zu verbindendenen Endabschnitt eines weiteren Kunststoffschlauches (15) an diesen Kunststoffschlauch (5) heranführt.

7. Anlage (20) nach Anspruch 6,
**dadurch gekennzeichnet, dass** die Anlage (20) mehrere Vorrichtungen (1) nach wenigstens einem der vorangegangenen Ansprüche 1 - 8 aufweist und die Heranführungseinrichtung (30) zwischen diesen Vorrichtungen (1) bewegbar ist.

8. Anlage (20) nach wenigstens einem der vorangegangenen
Ansprüche 6 - 7,
**dadurch gekennzeichnet, dass** die Anlage (20) eine Sensoreinrichtung (26) aufweist, welche eine geometrische Position eines Endabschnitts des Kunststoffschlauches erfasst.

9. Verfahren zum Verbinden von Kunststoffschläuchen mit den Schritten:
- Präparieren eines Endabschnitts eines ersten Kunststoffschlauchs (5) und Ablegen dieses Endabschnitts auf einer Vorrichtung (1) zum Verbinden von Kunststoffschläuchen
- Heranführen eines Endabschnitts eines zweiten Kunststoffschlauchs (15) an den Endabschnitt des ersten Kunststoffschlauches (5);
- Verbinden des Endabschnitts des ersten Kunststoffschlauches (5) mit dem Endabschnitt des zweiten Kunststoffschlauches (15) an einem vorgegbenen Verbindungsabschnitt;
wobei der Endabschnitt des ersten Kunststoffschlauches (5) wenigstens zeitweise gegenüber der Vorrichtung (1) befestigt wird, wobei ein oberhalb der Ablagefläche (2) vorgesehener Behandlungskörper (10) während des Verbindens gegenüber der Ablagefläche (2) sowohl in einer Längsrichtung (L) des Kunststoffschlauches (5), entlang derer der Kunststoffschlauch im Betrieb transportiert wird, als auch in einer senkrecht zu der Ablagefläche (2) stehenden Richtung bewegt wird, wobei
nach dem Verbinden der Endabschnitte der Behandlungskörper (10) über den Verbindungsabschnitt bewegt wird, um die Verbindung weiter zu verfestigen.

10. verfahren nach Anspruch 9,
**dadurch gekennzeichnet, dass** der Behandlungskörper (10) während des Verbindungsvorgangs sowohl in der Längsrichtung (L) des Kunststoffschlauchs (5) als auch in einer senkrecht zu der Ebene des Kunststoffschhlauchs (5) stehenden Richtung (R) bewegt wird.

11. Verfahren nach wenigstens einem der vorangegangenen Ansprüche 9 - 10,
**dadurch gekennzeichnet, dass** in den ersten Endabschnitt des Kunststoffschlauches (5) zwei Locher eingestanzt werden.

## Claims

1. Apparatus (1) for joining plastic tubes, comprising a depositing surface (2) on which an end section of a first plastic tube (5) is deposited, and comprising a fixing surface (6) for temporarily fixing to the apparatus (1) a region (5b) of the end section of the plastic tube (5), **characterised in that** a movable treatment body (10) for treating the end section of the plastic tube (5) is provided above the depositing surface (2), wherein this treatment body (10) can be moved relative to the depositing surface (2) both in a longitudinal direction (L) of the plastic tube (5) along which during operation the plastic tube is transported and in a direction (R) perpendicular to the depositing surface (2), wherein the treatment body (10) comprises at least a roller (10) which is pivotable around a rotation axis (X) which is perpendicular to a plane which is defined by the directions (R) and (L).

2. Apparatus (1) according to at least one of the preceding claims, **characterised in that** the treatment body (10) is arranged on the apparatus (1) such that it can pivot about a predefined pivot axis (Y).

3. Apparatus (1) according to at least one of the preceding claims, **characterised in that** the treatment body (10) can be moved between at least two positions relative to the depositing surface (2), wherein the treatment body (10) in a first position is arranged at least partially in front of the fixing surface (6) in the longitudinal direction (L) of the plastic tube (5).

4. Apparatus (1) according to at least one of the preceding claims, **characterised in that** the apparatus (1) comprises a holding rod (16) which is arranged parallel to the treatment body (10).

5. Apparatus (1) according to at least one of the preceding claims, **characterised in that** arresting means are provided which arrest the treatment body (10) in a predefined position relative to the fixing surface (6).

6. Installation for joining plastic tubes, comprising at least one apparatus (1) according to one of the preceding claims and also a guiding device (30) which guides up to the plastic tube (5) an end section of a further plastic tube (15) which is to be joined to the end section of this plastic tube (5).

7. Installation (20) according to claim 6, **characterised in that** the installation (20) comprises a plurality of apparatuses (1) according to at least one of the preceding claims 1 to 5, and the guiding device (30) can be moved between these apparatuses (1).

8. Installation (20) according to at least one of the preceding claims 6 to 7, **characterised in that** the installation (20) comprises a sensor device (26) which detects a geometric position of an end section of the plastic tube

9. Method for joining plastic tubes, comprising the steps:
- preparing an end section of a first plastic tube (5) and depositing this end section on an apparatus (1) for joining plastic tubes;
- guiding an end section of a second plastic tube (15) up to the end section of the first plastic tube (5):
- joining the end section of the first plastic tube (5) to the end section of the second plastic tube (15) at a predefined joining section;
wherein the end section of the first plastic tube (5) is at least temporarily fixed relative to the apparatus (1), wherein a treatment body (10) provided above the depositing surface (2) is moved relative to the depositing surface (2) during the joining operation both in a longitudinal direction (L) of the plastic tube (5) and also in a direction perpendicular to the depositing surface (2), wherein after the joining of the end sections the treatment body (10) is moved over the joining section in order to further strengthen the linkage.

10. Method according to claim 9, **characterised in that** the treatment body (10) is moved during the joining operation both in the longitudinal direction (L) of the plastic tube (5) and also in a direction (R) perpendicular to the plane of the plastic tube (5).

11. Method according to at least one of the preceding claims 9 to 10, **characterised in that** two holes are punched into the first end section of the plastic tube (5).

## Revendications

1. Système (1) pour le raccordement de tuyaux en matière plastique, avec une surface de pose (2), sur laquelle est déposé un tronçon d'extrémité d'un premier tuyau en matière plastique (5), avec une surface de fixation (6) permettant de fixer temporairement sur le système (1) une partie (5b) du tronçon d'extrémité du tuyau en matière plastique (5) ;
un corps de manipulation (10) mobile étant prévu au-dessus de la surface de pose (2) pour le traitement du tronçon d'extrémité du tuyau en matière plastique (5), ledit corps de manipulation (10) étant déplaçable par rapport à la surface de pose (2) dans une direction longitudinale (L) du tuyau en matière plastique (5), le long de laquelle le tuyau en matière plastique est transporté en cours de fonctionnement, ainsi que dans une direction (R) perpendiculaire à la surface de pose (2),
le corps de manipulation (10) comprenant au moins un rouleau (10) rotatif autour d'un axe de rotation (X) perpendiculaire à un plan défini par les directions (R) et (L).

2. Système (1) selon au moins une des revendications précédentes,
**caractérisé en ce que**
le corps de manipulation (10) est disposé de manière pivotante autour d'un axe de pivotement (Y) défini sur le système (1).

3. Système (1) selon au moins une des revendications précédentes,
**caractérisé en ce que**
le corps de manipulation (10) est déplaçable entre au moins deux positions par rapport à la surface de pose (2), le corps de manipulation (10) étant dans une première position disposé au moins partiellement devant la surface de fixation (6) dans la direction longitudinale (L) du tuyau en matière plastique (5).

4. Système (1) selon au moins une des revendications précédentes,
**caractérisé en ce que**
le système (1) comporte une barre de maintien (16) disposée parallèlement au corps de manipulation (10).

5. Système (1) selon au moins une des revendications précédentes,
**caractérisé en ce que**
des moyens de blocage sont prévus, lesquels bloquent le corps de manipulation (10) dans une position prédéfinie par rapport à la surface de fixation (6).

6. Installation pour le raccordement de tuyaux en matière plastique, avec au moins un système (1) selon l'une des revendications précédentes, ainsi qu'un dispositif de rapprochement (30) qui rapproche d'un tuyau en matière plastique (5) un tronçon d'extrémité d'un autre tuyau en matière plastique (15) à raccorder au tronçon d'extrémité dudit tuyau en matière plastique (5).

7. Installation (20) selon la revendication 6,
**caractérisée en ce que**
ladite installation (20) comporte plusieurs systèmes (1) selon au moins une des revendications 1 à 5, et **en ce que** le dispositif de rapprochement (30) est déplaçable entre ces systèmes (1).

8. Installation (20) selon au moins une des revendications 6 à 7, **caractérisée en ce que**
ladite installation (20) comporte un dispositif de capteur (26) qui détecte une position géométrique d'un tronçon d'extrémité du tuyau en matière plastique.

9. Procédé de raccordement de tuyaux en matière plastique, comprenant les étapes suivantes :
- préparation d'un tronçon d'extrémité d'un premier tuyau en matière plastique (5) et dépose dudit tronçon d'extrémité sur un système (1) pour le raccordement de tuyaux en matière plastique
- rapprochement d'un tronçon d'extrémité d'un deuxième tuyau en matière plastique (15) contre le tronçon d'extrémité du premier tuyau en matière plastique (5) ;
- raccordement du tronçon d'extrémité du premier tuyau en matière plastique (5) au tronçon d'extrémité du deuxième tuyau en matière plastique (15) sur une partie de connexion définie ;
le tronçon d'extrémité du premier tuyau en matière plastique (5) étant fixé au moins temporairement par rapport au système (1), un corps de manipulation (10) prévu au-dessus de la surface de pose (2) étant déplacé par rapport à la surface de pose (2) pendant le raccordement, dans une direction longitudinale (L) du tuyau en matière plastique (5), le long de laquelle le tuyau en matière plastique est transporté en cours de fonctionnement, ainsi que dans une direction perpendiculaire à la surface de pose (2),
le corps de manipulation (10) étant déplacé sur la partie de connexion après raccordement des tronçons d'extrémité, pour renforcer la connexion.

10. Procédé selon la revendication 9,
**caractérisé en ce que**,
pendant le raccordement, le corps de manipulation (10) est déplacé dans la direction longitudinale (L) du tuyau en matière plastique (5) ainsi que dans une direction (R) perpendiculaire au plan du tuyau en matière plastique (5).

11. Procédé selon au moins une des revendications 9 à 10, **caractérisé en ce que**
deux trous sont découpés à l'emporte-pièce dans le premier tronçon d'extrémité du tuyau en matière plastique (5).
